# EUROPÄISCHE PATENTSCHRIFT

(11) **EP 0 911 571 B1**
(45) Veröffentlichungstag und Bekanntmachung des Hinweises auf die Patenterteilung: **06.04.2005**
(21) Anmeldenummer: 98118967.3
(22) Anmeldetag: 07.10.1998
(51) Int. Cl.: F16T 1/20

(54) **Flüssigkeitsablass**
Fluid drain
Purge de fluide

(30) Priorität: 23.10.1997 DE 29718851 U
(43) Veröffentlichungstag der Anmeldung: 28.04.1999
(73) Patentinhaber: FESTO AG & Co, 73734 Esslingen (DE)
(72) Erfinder: Berger, Rolf, 72649 Wolfschlugen (DE)
(74) Vertreter: Abel, Martin, Dipl.-Ing.

(56) Entgegenhaltungen:
- EP-A- 0 793 053
- DE-A- 2 654 722
- DE-C- 708 625
- DE-C- 957 066
- US-A- 5 121 767

## Beschreibung

Die Erfindung betrifft einen Flüssigkeitsablass, mit einer an einem zur Aufnahme abgeschiedener Flüssigkeit dienenden Aufnahmebehältnis vorgesehenen Ablasseinrichtung, die ein Ablassventil und ein dessen Betätigung steuerndes Steuerventil aufweist, wobei das Steuerventil über einen mit dem Ablassventil kommunizierenden Steuerdurchlass verfügt, dem ein Steuerglied zugeordnet ist, das unter Vermittlung eines im Aufnahmebehältnis angeordneten, auf den Flüssigkeitsstand im Aufnahmebehältnis ansprechenden Schwimmers zwischen einer den Steuerdurchlass verschließenden Schließstellung und wenigstens einer den Steuerdurchlass zumindest teilweise freigebenden Offenstellung bewegbar ist, wobei der Schwimmer in einer im Innenraum des Aufnahmebehältnisses befindlichen Schwimmerkammer angeordnet ist, die durch eine Trennwand zum Innenraum des Aufnahmebehältnisses abgeschirmt ist und über wenigstens eine Zuströmöffnung mit dem Innenraum des Aufnahmebehältnisses in Verbindung steht.

Aus der DE 26 54 722 ist ein derartiger Flüssigkeitsablass bekannt, der einen Behälter aufweist, der eine Eintritts- und eine Austrittsöffnung besitzt, die im Gebrauch mit dem Druckluftsystem verbunden sind, wodurch in der Druckluft enthaltene Feuchtigkeit als Kondensat abgeschieden werden kann. Im Behälter befindet sich ein Schwimmer, der ab einem bestimmten Kondensat-Pegelstand im Behälter ein Ablassventil öffnet, wodurch schließlich Kondensat aus dem Behälter abfließt. Der Schwimmer seinerseits ist von einem Tragstück umgeben, so dass er vom restlichen Behälter-Innenraum abgekapselt ist. An den Trennwänden des Tragstücks befinden sich Durchlässe, wodurch Flüssigkeit vom Innenraum des Behälters durch die Trennwand hindurch in die abgekapselte Schwimmerkammer gelangen kann. Zum Schutz des Ventilinnern dient ein Sieb, das Feststoffpartikel zurückhält, so dass sie nicht in die Schwimmerkammer gelangen können. Ein Ablassen des Kondensats erfolgt über die Schwimmerkammer in einen Ablasskanal und von dort gegebenenfalls über angekoppelte Fluidschläuche in einen bereitgestellten Auffangbehälter.

Zur Aufbereitung von Druckluft eingesetzte Wartungsgeräte wie Filter oder Filter-Regler-Einheiten enthalten regelmäßig eine Abscheidevorrichtung, in der in der Druckluft enthaltende Feuchtigkeit als Kondensat abgeschieden wird. Das Kondensat wird in einem meist als Aufnahmeschale bezeichneten Aufnahmebehältnis aufgefangen, an dessen Unterseite ein automatisch arbeitender Flüssigkeitsablass installiert ist. Erreicht das abgeschiedene Kondensat einen vorbestimmten Pegelstand, öffnet der Flüssigkeitsablass selbsttätig, so dass das sich angesammelte Kondensat ausfließen kann.

Aus dem deutschen Gebrauchsmuster G 69 20 325 geht ein Flüssigkeitsablass hervor, der zur Erfassung des aktuellen Füllstandes über einen Schwimmer verfügt, der mit einem vertikal verschiebbar geführten Steuerglied zusammenarbeitet. Normalerweise sitzt das Steuerglied dichtend auf einem Ventilsitz auf und unterbricht dadurch die Fluidverbindung zwischen dem unter einem Innendruck stehenden Aufnahmebehältnis und einem zu einem Ablassventil führenden Steuerdurchlass. Bei steigendem Schwimmer wird das Steuerglied vom Ventilsitz abgehoben, so dass Druckluft zum Ablassventil strömen und dieses aus einer zuvor eingenommenen Sperrstellung in eine Ablassstellung umschalten kann. Sich im Aufnahmebehältnis angesammelte Flüssigkeit kann dann durch das Ablassventil hindurch abfließen.

Bei dem bekannten Flüssigkeitsablass können unter ungünstigen Bedingungen auf Grund innerhalb des Aufnahmebehältnisses auftretender Strömungsunregelmäßigkeiten oder Druckschwankungen Betriebsbeeinträchtigungen hervorgerufen werden. Es können beispielsweise unkontrollierte Öffnungs- und Schließvorgänge auftreten, auch Verkantungen des Schwimmers und dadurch behinderte Schwimmerbewegungen sind nicht auszuschließen.

Es ist die Aufgabe der vorliegenden Erfindung, einen zum Einsatz in Wartungsgeräten für die Druckluftaufbereitung geeigneten Flüssigkeitsablass zu schaffen, der bei kompakten Abmessungen über eine sichere Funktionsweise verfügt.

Zur Lösung dieser Aufgabe ist vorgesehen, dass der Strömungsweg für die bei geöffnetem Ablassventil ausströmende Flüssigkeit außerhalb der Schwimmerkammer verläuft.

Auf diese Weise befindet sich der in Höhenrichtung bewegliche Schwimmer unter Gewährleistung einer kompakten Bauweise weiterhin innerhalb des Aufnahmebehältnisses, ist jedoch in einer zum Innenraum des Aufnahmebehältnisses hin abgeschirmten Schwimmerkammer untergebracht, die praktisch eine Kapselung des Schwimmers bewirkt. Damit der Schwimmer dennoch auf den Füllstand im Innenraum ansprechen kann, kommuniziert die Schwimmerkammer über mindestens eine Zuströmöffnung mit diesem Innenraum, wobei die Zuströmöffnung so gestaltet und angeordnet werden kann, dass durch das den Innenraum durchströmende Druckmedium hervorgerufene Strömungsunregelmäßigkeiten, zum Beispiel Druckschwankungen oder Wirbelbildungen, sich nicht störend in die Schwimmerkammer und auf den Schwimmer auswirken können.

Vorteilhafte Weiterbildungen der Erfindung gehen aus den Unteransprüchen hervor.

Auch das Steuerventil mit seinem Steuerglied befindet sich zweckmäßigerweise innerhalb der Schwimmerkammer. Auf diese Weise ist das System: Schwimmer - Steuerventil allseitig vom Innenraum des Aufnahmebehältnisses abgekapselt. Fehlfunktionen des Steuerventils können damit wirksam ausgeschlossen werden.

Im Zusammenhang mit der Kapselung der Schwimmerkammer ist es ferner von Vorteil, wenn die wenigstens eine Zuströmöffnung, durch die die den Schwimmer beaufschlagende Flüssigkeit in die Schwimmerkammer eintritt, mit einer Filtereinrichtung versehen ist. Dadurch wird die in die Schwimmerkammer eintretende und mit dem Schwimmer und dem Steuerventil in Berührung kommende Flüssigkeit gefiltert und in der Flüssigkeit enthaltene Verunreinigungen außerhalb der Schwimmerkammer im Innenraum des Aufnahmebehältnisses zurückgehalten. Verschmutzungsbedingte Funktionsbeeinträchtigungen sind dadurch erheblich verringert.

Der Strömungsweg für die bei geöffnetem Ablassventil ausströmende Flüssigkeit ist außerhalb der Schwimmerkammer vorgesehen, wobei vorzugsweise in diesen Strömungsweg keine Filtereinrichtung eingeschaltet ist. Dadurch wird die unmittelbar ausströmende Flüssigkeit nicht gefiltert, und die in der Flüssigkeit enthaltenen Verunreinigungen oder sonstigen Partikel werden wirksam aus der Ablasseinrichtung ausgespült. Bei jedem Ablassvorgang findet somit eine Selbstreinigung statt.

Die die Schwimmerkammer vom Innenraum des Aufnahmebehältnisses abteilende Trennwand ist zweckmäßigerweise haubenartig ausgeführt und von oben her über das System: Schwimmer - Steuerventil übergestülpt, so dass eine die Schwimmerkammer zumindest seitlich und oben begrenzende Schutzhaube vorliegt. Bei entsprechender Ausgestaltung kann sich dabei die obere Begrenzungswand der Schutzhaube zur Anbringung von Führungsmitteln für das Steuerglied des Steuerventils eignen.

Eine weitere Minimierung der Baugröße ist erzielbar, wenn das Steuerglied des Steuerventils als Kippglied ausgebildet ist, das beim öffnungsvorgang eine seitwärts gerichtete Kippbewegung ausführt, bei der es zumindest anfänglich nur einseitig vom zugeordneten Ventilsitz abgehoben wird. Hier basiert der öffnungsvorgang darauf, daß das Steuerglied seitwärts gekippt wird und sich dabei zunächst nur einseitig vom Ventilsitz abhebt, wobei es sich andernteils auf der diametral entgegengesetzten Seite des Ventilsitzes an einer Stelle abstützt, die das Schwenkzentrum der Kippbewegung definiert. Das Steuerglied stellt mithin ein Kippglied dar, das auf Grund der besonderen Arbeitsweise über eine hohe Betriebssicherheit verfügt. Auch bei nur kleinen Querabmessungen des Flüssigkeitsablasses ermöglicht das angewandte Funktionsprinzip die Realisierung eines großen übersetzungsverhältnisses in bezug auf die vom Schwimmer auf das Steuerglied übertragbare Öffnungskraft. Legt man bei einem mit dem Flüssigkeitsablaß ausgestatteten Wartungsgerät einen Druckbereich von 1,5 bis 14 bar zugrunde, ist ohne weiteres ein z. B. achtzehnfacher Kraftüberschuß zum Öffnen des Steuerventils erreichbar, was eine hohe Funktionssicherheit gewährleistet. Damit verbunden ist die Möglichkeit zur Verwendung eines extrem leichten Schwimmers, der insbesondere als Hohlschwimmer ausgeführt sein kann.

In besonders zweckmäßiger Ausgestaltung weist das Steuerglied zumindest an seiner in der Schließstellung den Steuerdurchlaß überdeckenden Schließpartie eine im Querschnitt gesehen zum Ventilsitz hin gewölbte, bogenförmige Außenkontur auf, so daß es sich beim Öffnungsvorgang auf dem Ventilsitz abwälzen kann, was einen überaus gleichförmigen Umschaltvorgang bewirkt. In diesem Zusammenhang ist als besonders vorteilhaft anzusehen, wenn das Steuerglied im Bereich der bogenförmigen Querschnittskontur konvex nach Art einer Kugelkappe geformt ist. Hier paart sich ein ausgezeichnetes Abdichtverhalten in der Schließstellung mit einem sicheren und gleichförmigen Bewegungsablauf beim Öffnen und Schließen des Steuerventils.

Um eine gewisse Lagefixierung des Steuergliedes zu erreichen, können geeignete Führungsmittel vorhanden sein. Bei einer bevorzugten Ausgestaltung umfassen die Führungsmittel eine am Steuerglied im Bereich der Schließpartie festgelegte, mit radialem Spiel in den Steuerdurchlaß eintauchende Zentriernadel. Sie kann insbesondere ein seitliches Herabrutschen des Steuergliedes vom Ventilsitz und/oder eine Zentrierung beim Zurückstellen des Steuergliedes aus der Offenstellung in die Schließstellung bewirken.

Als weiterer Bestandteil der Führungsmittel kann eine auf der dem Ventilsitz entgegengesetzten Seite aus dem Steuerglied herausragende Führungsnadel vorgesehen sein, die in eine gehäuseseitig an der Ablaßeinrichtung vorgesehene, insbesondere schlitzartige Führungsvertiefung eintaucht und beispielsweise dazu dienen kann, die Richtung und/oder die Länge des Kippweges beim Umschalten des Steuergliedes zu definieren.

Als Betätigungselement für das Steuerglied ist vorzugsweise ein sich zweckmäßigerweise in Hubrichtung des Schwimmers erstreckender, nach oben ragender Vorsprung vorgesehen, der anfänglich noch mit axialem Abstand zum Steuerglied angeordnet ist und ab Erreichen einer bestimmten Schwimmhöhe des Schwimmers an einer Stelle auf das Steuerglied einwirkt, die mit radialem Abstand zum Ventilsitz angeordnet ist. Diese Ausführungsform ist besonders zweckmäßig in einem Fall, bei dem das Steuerglied halbkugelartig ausgeführt ist, wobei der Vorsprung in etwa in tangentialer Richtung auf das Steuerglied einwirken kann.

Nachfolgend wird die Erfindung anhand der beiliegenden Zeichnung näher erläutert. Es zeigen im einzelnen:
- Fig. 1: eine erste Bauform des erfindungsgemäßen Flüssigkeitsablasses im Längsschnitt,
- Fig. 2: einen vergrößerten Ausschnitt des Flüssigkeitsablasses aus Fig. 1 im Bereich des Steuerventils, wobei in durchgezogenen Linien die Schließstellung und in strichpunktierten Linien eine Offenstellung des Steuerventils gezeigt ist,
- Fig. 3: die Einzeldarstellung einer zu Führungsmitteln für das Steuerglied gehörenden schlitzartigen Führungsvertiefung im Querschnitt gemäß Schnittlinie III-III aus Fig. 2 und
- Fig. 4: den dem in Fig. 1 bei IV markierten Bereich entsprechenden Ausschnitt einer weiteren Ausführungsform eines Flüssigkeitsablasses, der im übrigen einen den Fig. 1 bis 3 entsprechenden Aufbau hat.

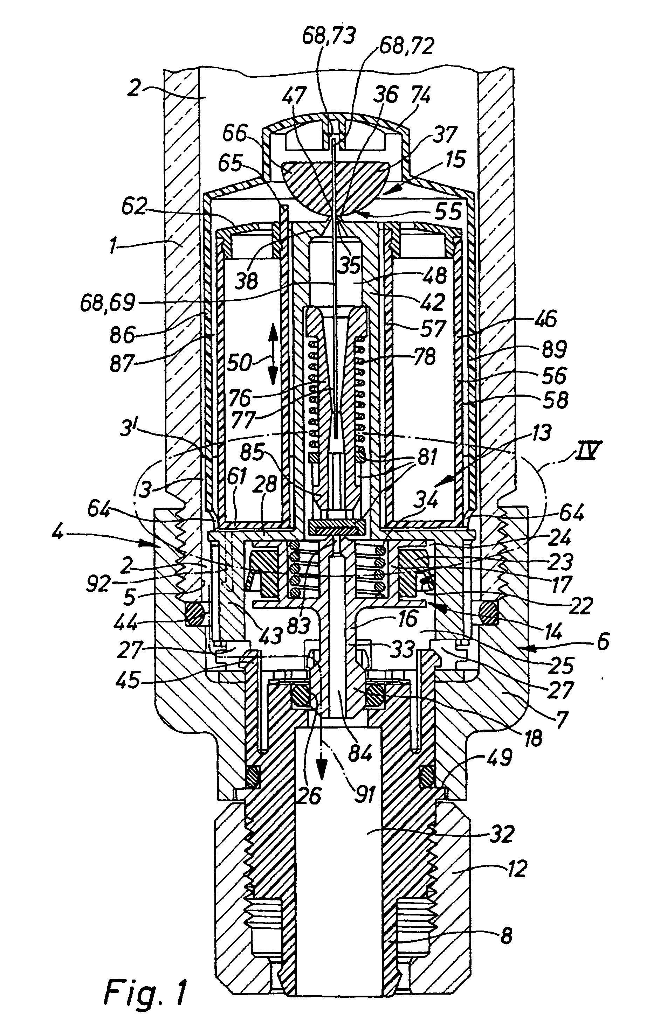

In Fig. 1 ist strichpunktiert der untere Endabschnitt eines becherähnlichen Aufnahmebehältnisses 1 gezeigt, das an den Grundkörper eines zur Aufbereitung von Druckluft dienenden Wartungsgerätes, beispielsweise eines Filters oder einer Filter-Regler-Einheit, angesetzt ist. Das Wartungsgerät enthält weiter oberhalb eine nicht näher dargestellte Abscheidevorrichtung, mit der Flüssigkeiten, insbesondere Wasser, aus der Druckluft abgeschieden werden, die angeschlossenen Verbrauchern, beispielsweise pneumatischen Arbeitszylindern, zugeführt werden soll.

Die abgeschiedene Flüssigkeit sammelt sich unten im Innenraum 2 des Aufnahmebehältnisses 1 an und ist in Fig. 1 bei 3 angedeutet, wobei der Pegelstand bei 3' ersichtlich ist. Da das Aufnahmebehältnis von der Druckluft durchströmt wird, steht es unter einem Innendruck, der beim gezeigten Ausführungsbeispiel je nach Druckeinstellung zwischen 1,4 und 14 bar betragen kann.

An der Unterseite des Aufnahmebehältnisses 1 ist ein vollautomatisch arbeitender Flüssigkeitsablaß 4 angeordnet. Bei ihm handelt es sich um eine Ablaßvorrichtung, die von Zeit zu Zeit selbsttätig, also ohne Fremdeinwirkung von außen, ein Ablassen der sich angesammelten Flüssigkeit 3 aus dem Aufnahmebehältnis 1 bewirkt. Der Flüssigkeitsablaß 4 ist zweckmäßigerweise in eine sich im unteren Wandabschnitt des Aufnahmebehältnisses 1 befindliche Öffnung 5 eingesetzt und beispielsgemäß durch eine Schraubverbindung fixiert.

Im einzelnen umfaßt der Flüssigkeitsablaß 4 beim Ausführungsbeispiel ein mehrteiliges Gehäuse 6, wobei ein Teil als Schraubteil 7 ausgeführt ist, das von unten her an das Aufnahmebehältnis 1 angeschraubt ist und die feste Verbindung zwischen dem Flüssigkeitsablaß 4 und dem Aufnahmebehältnis 1 herstellt.

Aus dem Schraubteil 7 ragt auf der dem Aufnahmebehältnis 1 entgegengesetzten Unterseite ein Anschlußstück 8 heraus, das als Stecknippel ausgeführt sein kann und das Aufstecken eines weiterführenden Schlauches ermöglicht. Zur Fixierung des nicht näher dargestellten Schlauches kann auf das Anschlußstück 8 eine Haltemutter 12 aufgeschraubt sein. Abgelassene Flüssigkeit kann somit vermittels des Schlauches in ein bereitstehendes Gefäß geleitet werden.

Die eigentliche Ablaßeinrichtung 13 des Flüssigkeitsablasses 4 umfaßt als wesentliche Bestandteile ein Ablaßventil 14 und ein dessen Betätigung steuerndes Steuerventil 15. Dabei ist das Ablaßventil 14 unterhalb des Steuerventils 15 angeordnet.

Das Ablaßventil 14 verfügt über ein Ventilglied 16, das beim Ausführungsbeispiel einen Kolben 17 und eine koaxial von diesem nach unten wegragende Verschlußpartie 18 umfaßt. Der Kolben 17 sitzt axial verschieblich in einer Kolbenkammer 22, mit deren zylindrischer Innenfläche er unter Vermittlung einer umfangsseitig angeordneten ringförmigen Dichtung 23 in Dichtkontakt steht. Somit unterteilt der Kolben 17 die Kolbenkammer 22 in einen oberen (24) und einen unteren (25) Ventilraum. Die Verschlußpartie 18 durchsetzt den unteren Ventilraum 25 und taucht in der aus Fig. 1 hervorgehenden Sperrstellung des Ablaßventils 14 unter Abdichtung in eine mit dem unteren Ventilraum 25 kommunizierende Ablaßöffnung 26 ein. Zur Abdichtung kann am Umfang der Ablaßöffnung 26 ein Dichtring vorgesehen sein.

Die abgeschiedene Flüssigkeit 3 gelangt über einen oder mehrere Verbindungskanäle 27 aus dem Innenraum 2 in den unteren Ventilraum 25. Dadurch wird der Kolben 17 im Sinne einer Bewegung in Richtung des oberen Ventilraums 24 beaufschlagt und letztlich in der in Fig. 1 gezeigten Sperrstellung gehalten, in der er an einer oben angeordneten axialen Begrenzungswand 28 der Kolbenkammer 22 anliegt. Um ein Abfließen der Flüssigkeit 3 zu ermöglichen, wird das Ventilglied 16 durch entsprechende Beaufschlagung des Kolbens 17 nach unten verschoben, so daß die Verschlußpartie 18 die Ablaßöffnung 26 freigibt, wonach die Flüssigkeit 3 aus dem unteren Ventilraum 25 durch die Ablaßöffnung 26 hindurch in den sich anschließenden, im Anschlußstück 8 ausgebildeten Ablaßkanal 32 ausströmt. In der entsprechenden Ablaßstellung greift lediglich ein Längenabschnitt 33 geringeren Durchmessers der Verschlußpartie 18 in die Ablaßöffnung 26 ein, so daß ein offener Ringquerschnitt verbleibt, der der Flüssigkeit das Ausströmen ermöglicht.

Das Umschalten des Ablaßventils 14 aus der Sperrstellung in die Ablaßstellung wird beim Ausführungsbeispiel teils durch mechanische und teils durch fluidische Druckkräfte herbeigeführt. Die mechanische Kraftkomponente liefert größtenteils eine erste Druckfeder 34, die sich im oberen Ventilraum 24 befindet und sich zwischen der Begrenzungswand 28 und dem Kolben 17 abstützt. Sie ist so ausgelegt, daß sie allein nicht in der Lage ist, das Ventilglied 16 aus der Sperrstellung in die Ablaßstellung zu verschieben, solange der untere Ventilraum unter dem im Innenraum herrschenden Innendruck steht.

Die Beaufschlagung des Ventilgliedes 16 im öffnungssinne durch eine fluidische Druckkraft wird durch das Steuerventil 15 gesteuert. Dieses verfügt über einen Steuerdurchlaß 35, der von einem ringförmigen Ventilsitz 36 umgeben ist, welchem ein Steuerglied 37 zugeordnet ist.

Der Steuerdurchlaß 35 durchsetzt beim Ausführungsbeispiel eine axiale Abschlußwand 38 eines Führungsrohres 42, das sich ausgehend von der axialen Begrenzungswand 28 der Kolbenkammer 22 koaxial nach oben in den Innenraum 2 des Aufnahmebehältnisses 1 hinein erstreckt. Es ist zweckmäßigerweise als einstückiger Bestandteil mit einem die Kolbenkammer 22 enthaltenden Basiskörper 43 ausgeführt, der vorliegend in einer zum Innenraum 2 hin offenen Ausnehmung 44 des Schraubteils 7 gehalten ist. Zur Halterung können hakenartige Rastelemente 45 dienen, die an dem Anschlußstück 8 angeformt sind, welches bis zu einem Anschlag 49 in das Schraubteil 7 eingesteckt ist, wobei die Rastelemente 45 das Schraubteil 7 durchsetzen und den Basiskörper 43 verrastend hintergreifen.

Das Führungsrohr 42 dient zur axialen Verschiebeführung eines Schwimmers 46. Dieser Schwimmer 46 ist als Bauteil mit ringförmigem Querschnitt ausgeführt und koaxial auf das Führungsrohr 42 aufgesteckt. In Gebrauchslage ragt das Führungsrohr 42 vertikal nach oben, so daß der Schwimmer 46 daran in Höhenrichtung gemäß Doppelpfeil 50 verschiebbar geführt ist. Die momentane höhenmäßige Schwimmerstellung, nachfolgend als Schwimmhöhe bezeichnet, hängt dabei vom Füllstand 3' der Flüssigkeit 3 im Aufnahmebehältnis 1 ab, die den Schwimmer 46 beaufschlagt.

Solange der Schwimmer 46 unterhalb einer bestimmten Schwimmhöhe verbleibt, nimmt das Steuerventil 15 die Schließstellung ein. Das Steuerglied 37 deckt dabei den Steuerdurchlaß 35 ab und liegt mit einer Schließpartie 47 dichtend am Ventilsitz 36 an. Dadurch ist die im Aufnahmebehältnis 1 befindliche Druckluft, die auch am Steuerglied 37 ansteht, an einem Hindurchströmen durch den Steuerdurchlaß 35 gehindert.

Übersteigt die Schwimmhöhe des Schwimmers 46 einen vorgegebenen Grenzwert, wirkt er derart auf das Steuerglied 37 ein, daß dieses vom Ventilsitz 36 abgehoben wird und den Steuerdurchlaß 35 freigibt. Dadurch kann die Druckluft durch den Steuerdurchlaß 35 hindurch in einen vom Innenraum des Führungsrohrs 42 gebildeten Steuerkanal 48 ausströmen, der mit dem oberen Ventilraum 24 kommuniziert. Folglich wird der Kolben 17 nicht nur auf der Seite des unteren Ventilraumes 25, sondern auch auf der Seite des oberen Ventilraumes 24 mit dem im Innenraum 2 herrschenden Fluiddruck beaufschlagt, so daß insoweit ein Kräftegleichgewicht herrscht und nunmehr die erste Druckfeder 34 in der Lage ist, das Ventilglied 16 nach unten in die Ablaßstellung zu verschieben.

Der Schwimmer 46 und zweckmäßigerweise auch das zugeordnete Steuerventil 15 befinden sich vorzugsweise innerhalb des Innenraumes 2. Auch das Ablaßventil 16 kann sich dort befinden.

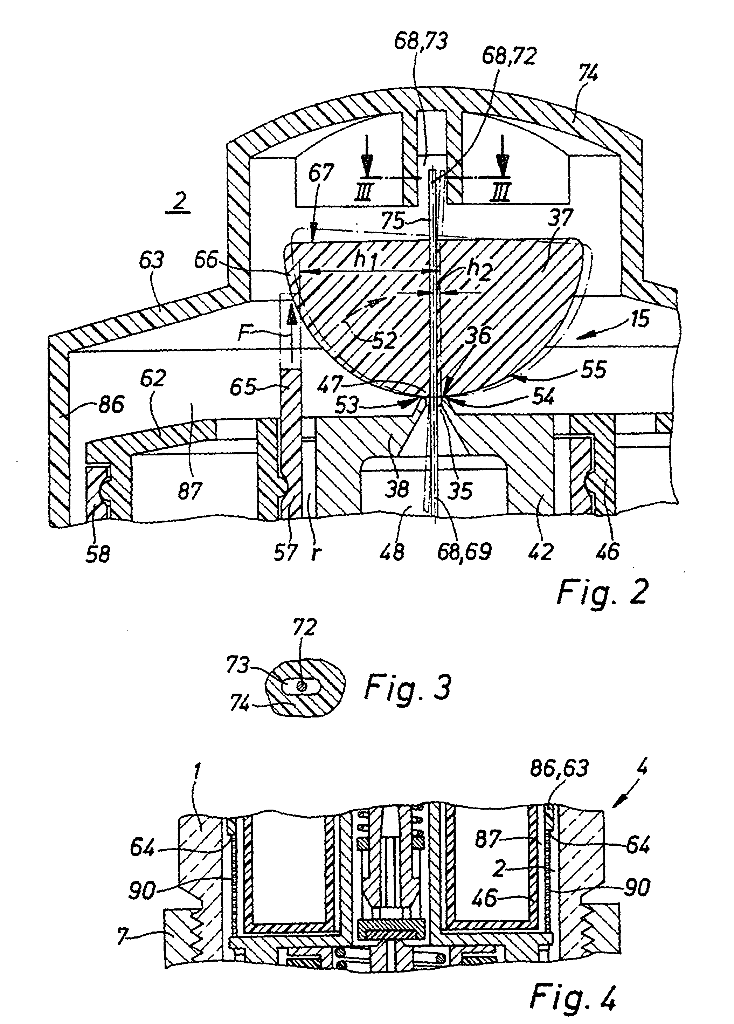

Eine Besonderheit des Steuerventils 15 liegt darin, daß sein Steuerglied 37 als Kippglied ausgebildet ist, das bei dem vom Schwimmer 46 hervorgerufenen öffnungsvorgang keine rein parallel zur Schwimmerbewegung 50 gerichtete lineare Hubbewegung ausführt, sondern eine seitwärts, quer zur Schwimmerbewegung gerichtete Kippbewegung. Die Kippbewegung ist in Fig. 2 durch Pfeil 52 angedeutet, wobei diese Fig. 2 auch deutlich macht, daß das Steuerglied 37 beim Öffnungsvorgang zumindest anfänglich nur einseitig (bei 53) vom Ventilsitz 36 abgehoben wird. Auf der diametral entgegengesetzten Seite stützt sich das Steuerglied 37 weiterhin am Ventilsitz 36 ab, wobei der entsprechende Bereich das Schwenkzentrum 54 bildet, um den das Steuerglied 37 bei der Kippbewegung verschwenkt wird. Die Schwenkachse verläuft rechtwinkelig zur Hubrichtung 50 des Schwimmers 46 in horizontaler Richtung.

Bereits ein geringfügiges Verkippen des Steuergliedes 37 reicht aus, um der Druckluft das vollständige Unterspülen des Steuergliedes 37 und damit den Eintritt in den Steuerdurchlaß 35 zu ermöglichen.

Beim Ausführungsbeispiel kommt ein Steuerglied 37 zum Einsatz, das halbkugelartig ausgeführt ist. Das Steuerglied 37 ist der axialen Abschlußwand 38 außerhalb des Führungsrohres 42 axial vorgelagert und dabei so orientiert, daß ihre kugelige Außenfläche 55 dem Ventilsitz 36 zugewandt ist. Durch diese Ausgestaltung wird erreicht, daß die Schließpartie 47 eine im Querschnitt gemäß Fig. 2 gesehen zum darunter angeordneten Ventilsitz 36 hin gewölbte, bogenförmige Außenkontur aufweist und insbesondere nach Art einer Kugelkappe geformt ist. Mithin ist das Steuerglied 37 in der Lage, sich beim übergang zwischen der Offenstellung und der Schließstellung im Bereich des Schwenkzentrums 54 reibungsarm auf dem Ventilsitz 36 abzuwälzen, wobei seitens des Schwimmers 46 nur extrem geringe Öffnungs-Stellkräfte aufzuwenden sind.

Der Schwimmer 46 selbst kann bei der erfindungsgemäßen Ausgestaltung sehr leichtgewichtig ausgeführt werden. Er ist daher beim Ausführungsbeispiel als im Querschnitt ringförmiger Hohlkörper ausgebildet und kann als Hohlschwimmer bezeichnet werden. Er besteht beim Ausführungsbeispiel aus einem einstückigen, aus Kunststoffmaterial hergestellten Grundkörper 56, der sich aus einer mit Radialspiel r auf dem Führungsrohr 42 laufenden hohlzylindrischen Innenwand 57, einer die Innenwand 57 mit Radialabstand koaxial umschließenden Außenwand 58 sowie einer die beiden Wände 57, 58 miteinander verbindenden ringscheibenartigen Bodenwand 61 zusammensetzt. Die Bodenwand 61 bildet die Unterseite des Schwimmers 46, sie liegt der axialen Begrenzungswand 28 des Basiskörpers 43 axial oberhalb gegenüber. Den axial entgegengesetzten oberen Abschluß des Schwimmers 46 bildet eine wiederum ringscheibenförmig ausgeführte obere Schwimmerwand 62, die als separates Teil ausgeführt sein kann, das beim Ausführungsbeispiel in den Grundkörper 56 eingerastet ist.

Der Schwimmer 46 und das Steuerglied 37 sind zweckmäßigerweise von einem nachfolgend als Schutzhaube 63 bezeichneten haubenartigen Element überdeckt, das zweckmäßigerweise an dem Basiskörper 43 festgelegt ist. Auf diese Weise liegt eine die Betriebssicherheit der Ablaßeinrichtung 13 fördernde Kapselung des Schwimmer-Steuerventil-Systems vor.

Die Schutzhaube 63 bildet ganz allgemein eine Trennwand 86, die innerhalb des Innenraumes 2 des Aufnahmebehältnisses 1 eine den Schwimmer 46 und das Steuerventil 15 enthaltende Schwimmerkammer 87 umfangsseitig begrenzt und zum benachbarten Innenraum 2 des Aufnahmebehältnisses 1 abschirmt. Nur durch eine oder mehrere, einen verhältnismäßig kleinen Durchlaßquerschnitt definierende Zuströmöffnungen 64 liegt eine Fluidverbindung zwischen der Schwimmerkammer 87 und dem diese umgebenden Innenraum 2 des Aufnahmebehältnisses 1 vor, so daß die abgeschiedene Flüssigkeit 3 in der Lage ist, in die Schwimmerkammer 87 einzudringen und ein Anheben des Schwimmers 46 zu verursachen.

Die Zuströmöffnungen 64 befinden sich zweckmäßigerweise am unteren Endbereich der Schwimmerkammer 87. Sie können so gestaltete sein, daß ihre dem Innenraum 2 zugewandten Öffnungen in der Regel unterhalb des Flüssigkeitspegels 3' liegen. Sie sind beim Ausführungsbeispiel von axialen Zwischenräumen gebildet, die zwischen dem unteren Endbereich der Schutzhaube 63 und dem dieser gegenüberliegenden, vom Basiskörper 43 repräsentierten Gehäusebestandteil der Ablaßeinrichtung 13 gebildet sind. Die Zwischenräume können dadurch erzeugt sein, daß die hohlzylindrische seitliche Begrenzungswand 89 der Schutzhaube 63 am unteren Rand mit in Umfangsrichtung beabstandeten Aussparungen versehen ist.

Durch die Schutzhaube 63 erfolgt eine vollständige Abschirmung des Schwimmers 46 und des Steuergliedes 37 vom Innenraum 2 des Aufnahmebehältnisses 1, so daß die in diesem Innenraum 2 zwangsläufig auftretenden und von der hindurchströmenden Druckluft erzeugten Luftströmungen keine Möglichkeit haben, auf die vorerwähnten Bauteile einzuwirken und Fehlfunktionen hervorzurufen.

Die Befestigung der Schutzhaube 63 an dem Basiskörper 43 erfolgt beim Ausführungsbeispiel durch eine Rastverbindung. Hierzu können an der Schutzhaube 63 und insbesondere in axialer Verlängerung des unteren Randes der seitlichen Begrenzungswand 89 nach unten ragende Rasthaken 92 vorgesehen sein (strichpunktiert angedeutet), die eine am Basiskörper 43 vorgesehene Rastgegenfläche hintergreifen, so daß die Schutzhaube 63 mit ihrem unteren Rand axial gegen die nach oben weisende Außenfläche der axialen Begrenzungswand 28 gehalten wird.

Zur Betätigung des Steuergliedes 37 ist am Schwimmer 46 ein über dessen axiale Oberseite nach oben vorragender Vorsprung 65 vorgesehen. Der Vorsprung 65 kann nasenartig ausgeführt sein. Die Abstimmung der Baubreite des Steuergliedes 37 auf die Plazierung des Vorsprunges 65 ist so getroffen, daß das Steuerglied 37 mit einer Beaufschlagungspartie 66 in den axialen Hubweg des Vorsprunges 65 ragt. Beim Ausführungsbeispiel ist dies dadurch gewährleistet, daß der Halbkugel-Durchmesser des Steuergliedes 37 etwas größer gewählt ist als der Außendurchmesser des Führungsrohrs 42, wobei der Vorsprung 65 in axialer Verlängerung der hohlzylindrischen Innenwand 57 des Schwimmers 46 verläuft, so daß die Beaufschlagungspartie 66 im übergangsbereich zwischen der kugeligen Außenfläche 55 und der von dieser abgewandten Abflachung 67 liegt. Die Krafteinleitung der Betätigungskraft F in das Steuerglied 37 erfolgt somit etwa tangential, wobei ein großer Krafthebelarm h1 zur Verfügung steht. Der Krafthebelarm h1 ist im Vergleich zum Lasthebelarm h2, der etwa dem Radius des düsenartig gestalteten Steuerdurchlasses 35 entspricht, sehr groß, so daß ein hohes Übersetzungsverhältnis, beim Ausführungsbeispiel 1 : 18, vorliegt, das stets einen ausreichend großen Kraftüberschuß zum Öffnen des Steuerventils gewährleistet. In Fig. 2 ist strichpunktiert die Stellung des Vorsprungs 65 und des Steuergliedes 37 in der Offenstellung des Steuerventils 15 angedeutet.

Zur Führung des Steuergliedes 37 bei seiner Öffnungs- und Schließbewegung verfügt das Ausführungsbeispiel über geeignete Führungsmittel 68. Zu diesen Führungsmitteln 68 gehört eine insbesondere aus Stahl bestehende Zentriernadel 69, die am Steuerglied 37 festgelegt ist und sich ausgehend von der Schließpartie 47 nach unten erstreckt, wobei sie mit umlaufendem radialem Spiel in den Steuerdurchlaß 35 eintaucht. Ihre Länge ist vorzugsweise so gewählt, daß sie sich auch noch ein Stück weit in den anschließenden Steuerkanal 48 erstreckt. Sie sorgt im wesentlichen dafür, daß das Steuerglied 37 nicht vom Ventilsitz 36 herunterrutscht und beim Zurückstellen aus der Offenstellung in die Schließstellung eine sichere Zentrierung in dieser Schließstellung erfährt.

Als weiteres Führungsmittel 68 ist eine Führungsnadel 72 vorgesehen, die auf der der Schließpartie 47 entgegengesetzten Seite an zentraler Stelle im Bereich der Abflachung 67 über das Steuerglied 37 hinausragt und vorzugsweise koaxial zu der bezüglich des Kugelmittelpunkts radial verlaufenden Zentriernadel 69 ausgerichtet ist. Die Führungsnadel 72 taucht in eine gehäusefeste, schlitzartig ausgebildete Führungsvertiefung 73 ein, die beim Ausführungsbeispiel an der Schutzhaube 63 ausgebildet ist. Sie befindet sich an der Innenseite der oberen axialen Begrenzungswand 74 der Schutzhaube 63.

Zweckmäßigerweise ist die Führungsvertiefung 73 als Längsschlitz ausgebildet (Fig. 3), dessen Längserstreckung radial bezüglich der Längserstreckung der Führungsnadel 72 verläuft. Die Schlitzbreite ist so auf die Dicke der Führungsnadel 72 abgestimmt, daß die Führungsnadel 72 in Längsrichtung des Längsschlitzes beweglich und in Querrichtung abgestützt ist. Die in Längsrichtung der Führungsnadel 72 gemessene Schlitztiefe ist so gewählt, daß sich für die Führungsnadel 72 eine für die notwendige Führung ausreichende Eintauchtiefe ergibt.

Durch die Längsgestalt der Führungsvertiefung 73 wird für die Öffnungs- und Schließbewegung des Steuergliedes 37 eine feste Richtung vorgegeben. Dadurch wird undefinierten Bewegungen vorgebeugt.

Die Führungsnadel 72 und/oder die Zentriernadel 69 können gleichzeitig Mittel zur Begrenzung des Kippweges des Steuergliedes 37 bilden. Im Falle der Führungsnadel 72 ist lediglich die Schlitzlänge der Führungsvertiefung 73 entsprechend anzupassen.

Die Kontaktbereiche zwischen dem Steuerglied 37 und dem Ventilsitz 36 bestehen zweckmäßigerweise aus Material mit gummielastischen Eigenschaften. Eine besonders kostengünstige Realisierung ergibt sich, wenn das Steuerglied 37 insgesamt aus gummielastischem Material besteht, beispielsweise aus sogenanntem NBR. In diesem Zusammenhang kann vorgesehen sein, daß die Zentriernadel 69 und die Führungsnadel 72 Bestandteile eines einstückigen Nadelelementes 75 sind, das derart in das Steuerglied 37 einvulkanisiert ist, daß es auf entgegengesetzten Seiten mit einem die Zentriernadel und die Führungsnadel bildenden Endabschnitt hinausragt.

Wenn das Steuerglied 37 eine Kippbewegung ausführt, werden gleichzeitig die Zentriernadel 69 und die Führungsnadel 72 verschwenkt. Die Zentriernadel 69 ist dabei mit einem Pendel vergleichbar. Ihr Schwenkweg wird beim Ausführungsbeispiel von einer in das Führungsrohr 42 eingesetzten Stützhülse 76 begrenzt, in deren zentralen koaxialen Durchgang 77 die Zentriernadel 69 eintaucht. Um das Einfädeln zu erleichtern, ist der Durchgang 77 in Richtung zum Steuerdurchlaß 35 hin konisch erweitert.

An der Stützhülse 76 stützt sich eine weitere Druckfeder 78 ab, die ein zwischen der Stützhülse 76 und dem Kolben 17 angeordnetes, axial bewegliches Schließglied 81 beaufschlagt und dieses dabei gegen die Mündung 83 eines das Ventilglied 16 koaxial durchsetzenden Entlüftungskanals 84 drückt. Dieser mündet andernends in den Ablaßkanal 32 und gewährleistet ein Zurückstellen des Ventilgliedes 16 in die Sperrstellung, wenn das Steuerventil 15 wieder als Folge davon geschlossen wurde, daß der Schwimmer 46 bedingt durch auslaufende Flüssigkeit 3 absinkt und nicht mehr am Steuerglied 37 angreift.

Der axiale Hubweg des Schließgliedes 81 ist geringer als derjenige des Ventilgliedes 16 - es wird nach einer gewissen Wegstrecke von Radialvorsprüngen 85 der Stützhülse 76 gestoppt -, so daß die zuvor noch verschlossene Mündung 83 des Entlüftungskanals 84 freigegeben wird, wenn das Ventilglied 16 sich vollständig in die Ablaßstellung bewegt hat. Dies hat zur Folge, daß bei anschließend wieder geschlossenem Steuerventil 15 der obere Ventilraum 24 über den Entlüftungskanal 84 entlüftet wird und somit das Ventilglied 16 durch den im unteren Ventilraum 25 herrschenden Druck in die Sperrstellung zurückgeschoben wird.

Die Fig. 4 zeigt einen Ausschnitt eines weiteren Ausführungsbeispieles des Flüssigkeitsablasses 4, der sich lediglich dadurch von der Ausführungsform der Fig. 1 bis 3 unterscheidet, daß der wenigstens einen Zuströmöffnung 64 eine Filtereinrichtung 90 zugeordnet ist. Jede Zuströmöffnung 64 ist also mit einer Filtereinrichtung 90 versehen, die zum Beispiel in die betreffende Zuströmöffnung 64 eingesetzt sein kann und die so ausgelegt ist, daß sie zwar Flüssigkeit aus dem Innenraum 2 in die Schwimmerkammer 87 eintreten läßt, in der Flüssigkeit enthaltene Verunreinigungen jedoch zurückhält. Dadurch wird die Schwimmerkammer 87 und dadurch insbesondere das Steuerventil 15 vor Verunreinigungen geschützt. Dies ist insbesondere deshalb von erheblichem Vorteil, weil der Steuerdurchlaß 35 düsenartig mit engem Querschnitt ausgeführt ist und daher leicht zur Verschmutzung neigt.

Die bei geöffnetem Ablaßventil 14 durch die Ablaßöffnung 26 ausströmende Flüssigkeit strömt nicht durch die Schwimmerkammer 87 und wird somit auch nicht gefiltert. Ihr Strömungsweg, der in Fig. 1 strichpunktiert bei 91 angedeutet ist, verläuft außerhalb der Schwimmerkammer und beispielsgemäß vom Innenraum 2 durch die Verbindungskanäle 27 hindurch in den unteren Ventilraum 25 und von diesem dann durch die freigegebene Ablaßöffnung 26 in den Ablaßkanal 32. Der Vorteil dieses Strömungsverlaufes liegt darin, daß in der Flüssigkeit eventuell enthaltene Verunreinigungen, auch solche, die von der eventuell vorhandenen Filtereinrichtung 90 im Innenraum 2 zurückgehalten werden, ausgespült werden, so daß bei jedem Ablaßvorgang gleichzeitig ein Selbstreinigungsvorgang stattfindet.

## Patentansprüche

1. Flüssigkeitsablass, mit einer an einem zur Aufnahme abgeschiedener Flüssigkeit (3) dienenden Aufnahmebehältnis (1) vorgesehenen Ablasseinrichtung (13), die ein Ablassventil (14) und ein dessen Betätigung steuerndes Steuerventil (15) aufweist, wobei das Steuerventil (15) über einen mit dem Ablassventil (14) kommunizierenden Steuerdurchlass (35) verfügt, dem ein Steuerglied (37) zugeordnet ist, das unter Vermittlung eines im Aufnahmebehältnis (1) angeordneten, auf den Flüssigkeitsstand im Aufnahmebehältnis (1) ansprechenden Schwimmers (46) zwischen einer den Steuerdurchlass (35) verschließenden Schließstellung und wenigstens einer den Steuerdurchlass (35) zumindest teilweise freigebenden Offenstellung bewegbar ist, wobei der Schwimmer (46) in einer im Innenraum (2) des Aufnahmebehältnisses (1) befindlichen Schwimmerkammer (87) angeordnet ist, die durch eine Trennwand (86) zum Innenraum (2) des Aufnahmebehältnisses (1) abgeschirmt ist und über wenigstens eine Zuströmöffnung (64) mit dem Innenraum (2) des Aufnahmebehältnisses (1) in Verbindung steht, **dadurch gekennzeichnet, dass** der Strömungsweg (91) für die bei geöffnetem Ablassventil (14) ausströmende Flüssigkeit außerhalb der Schwimmerkammer (87) verläuft.

2. Flüssigkeitsablass nach Anspruch 1, **dadurch gekennzeichnet, dass** das Steuerventil (15) innerhalb der Schwimmerkammer (87) angeordnet ist.

3. Flüssigkeitsablass nach Anspruch 1 oder 2, **dadurch gekennzeichnet, dass** die Trennwand (86) eine die seitliche und die obere Begrenzung der Schwimmerkammer (87) bildende Schutzhaube (63) umfasst.

4. Flüssigkeitsablass nach Anspruch 3, **dadurch gekennzeichnet, dass** die wenigstens eine Zuströmöffnung (64) von einem Zwischenraum zwischen dem unteren Endbereich der Schutzhaube (63) und dem dieser gegenüberliegenden Gehäusebestandteil (43) der Ablasseinrichtung (13) gebildet ist.

5. Flüssigkeitsablass nach einem der Ansprüche 1 bis 4, **dadurch gekennzeichnet, dass** der wenigstens einen Zuströmöffnung (64) eine Filtereinrichtung zugeordnet ist.

6. Flüssigkeitsablass nach einem der Ansprüche 1 bis 5, **dadurch gekennzeichnet, dass** der Strömungsweg (91) für die ausströmende Flüssigkeit filterlos ausgebildet ist.

7. Flüssigkeitsablass nach einem der Ansprüche 1 bis 6, **dadurch gekennzeichnet, dass** das Steuerglied (37) als in Schließstellung auf einem dem Steuerdurchlass (35) zugeordneten Ventilsitz (36) aufliegendes Kippglied ausgebildet ist, das beim Öffnungsvorgang eine seitwärts gerichtete Kippbewegung ausführt, bei der es zumindest anfänglich nur einseitig vom Ventilsitz (36) abgehoben wird.

8. Flüssigkeitsablass nach einem der Ansprüche 1 bis 7, **dadurch gekennzeichnet, dass** das Steuerglied (37) zumindest an seiner in der Schließstellung den Steuerdurchlass (35) überdeckenden Schließpartie (47) eine im Querschnitt gesehen zum Ventilsitz (36) hin gewölbte, bogenförmige Außenkontur aufweist und sich beim Öffnungsvorgang auf dem Ventilsitz (36) abwälzt.

9. Flüssigkeitsablass nach Anspruch 8, **dadurch gekennzeichnet, dass** das Steuerglied (37) zumindest an seiner in der Schließstellung den Steuerdurchlass (35) überdeckenden Schließpartie (47) nach Art einer Kugelkappe geformt ist.

10. Flüssigkeitsablass nach Anspruch 9, **dadurch gekennzeichnet, dass** das Steuerglied (37) halbkugelartig ausgeführt ist.

11. Flüssigkeitsablass nach einem der Ansprüche 7 bis 10, **dadurch gekennzeichnet, dass** zur Führung des Steuergliedes (37) bei der Öffnungs- und/oder Schließbewegung dienende Führungsmittel (68) vorhanden sind.

12. Flüssigkeitsablass nach Anspruch 11, **dadurch gekennzeichnet, dass** die Führungsmittel (68) eine am Steuerglied (37) festgelegte, mit radialem Spiel in den Steuerdurchlass (35) eintauchende Zentriernadel (69) umfassen.

13. Flüssigkeitsablass nach Anspruch 11 oder 12, **dadurch gekennzeichnet, dass** die Führungsmittel (68) eine auf der dem Ventilsitz (36) entgegengesetzten Seite über das Steuerglied (37) hinausragende, in eine insbesondere schlitzartige Führungsvertiefung (73) eintauchende Führungsnadel (72) umfassen.

14. Flüssigkeitsablass nach Anspruch 12 und 13, **dadurch gekennzeichnet, dass** die Zentriernadel (69) und die Führungsnadel (72) einstückiger Bestandteil eines das Steuerglied (37) durchsetzenden Nadelelementes (75) sind.

15. Flüssigkeitsablass nach einem der Ansprüche 1 bis 14, **dadurch gekennzeichnet, dass** als Betätigungselement für das Steuerglied (37) ein am Schwimmer (46) angeordneter Vorsprung (65) vorgesehen ist, der ab Erreichen einer bestimmten Schwimmhöhe des Schwimmers (46) mit radialem Abstand zum Ventilsitz (36) auf das Steuerglied (37) einwirkt.

16. Flüssigkeitsablass nach einem der Ansprüche 1 bis 15, **dadurch gekennzeichnet, dass** der Schwimmer (46) als im Querschnitt insbesondere ringförmiger Hohlkörper ausgeführt ist.

## Claims

1. Liquid drain with a drain device (13) mounted on a receiver tank (1) for collected liquid (3) and comprising a drain valve (14) and a control valve (15) controlling the operation thereof, wherein the control valve (15) incorporates a control passage (35) communicating with the drain valve (14), to which is assigned a control element (37) movable, in response to a float (46) located in the receiver tank (1) and responding to the liquid level in the receiver tank (1), between a closed position in which the control passage (35) is blocked and at least one open position in which the control passage (35) is at least partially unblocked, wherein the float (46) is located in a float chamber (87) within the interior (2) of the receiver tank (1), said float chamber being screened against the interior (2) of the receiver tank (1) by a separator (86) and communicating with the interior (2) of the receiver tank (1) via at least one inlet port (64), **characterised in that** the flow path (91) for the liquid discharged when the drain valve (14) is open runs outside the float chamber (87).

2. Liquid drain according to claim 1, **characterised in that** the control valve (15) is located within the float chamber (87).

3. Liquid drain according to claim 1 or 2, **characterised in that** the separator (86) includes a protective cover (63) forming the lateral and top boundary of the float chamber (87).

4. Liquid drain according to claim 3, **characterised in that** the at least one inlet port (64) is represented by a clearance between the lower end section of the protective cover (63) and the opposite housing part (43) of the drain device (13).

5. Liquid drain according to any of claims 1 to 4, **characterised in that** a filter unit is assigned to the at least one inlet port (64).

6. Liquid drain according to any of claims 1 to 5, **characterised in that** the flow path (91) for the discharged liquid does not contain any filter.

7. Liquid drain according to any of claims 1 to 6, **characterised in that** the control element (37) is designed as a tilting element lying in a valve seat (36) assigned to the control passage (35) in the closed position and performing a lateral tilting movement in which at least initially only one end is lifted off the valve seat (36) during the opening process.

8. Liquid drain according to any of claims 1 to 7, **characterised in that** the control element (37) has an arcuate external contour arched towards the valve seat (36) if viewed in cross-section at least in its closing section (47) covering the control passage (35) in the closed position and rolls off the valve seat (36) during the opening process.

9. Liquid drain according to claim 8, **characterised in that** the control element (37) has the shape of a spherical cap at least in its closing section (47) covering the control passage (35) in the closed position.

10. Liquid drain according to claim 9, **characterised in that** the control element (37) is designed hemispherical.

11. Liquid drain according to any of claims 7 to 10, **characterised in that** guide means (68) are provided for the guidance of the opening and/or closing movement of the control element (37).

12. Liquid drain according to claim 11, **characterised in that** the guide means (68) include a centring needle (69) located on the control element (37) and dipping into the control passage (35) with radial play.

13. Liquid drain according to claim 11 or 12, **characterised in that** the guide means (68) include a guide needle (72) projecting over the control element (37) on the side opposite the valve seat (36) and dipping into an in particular slot-like guide recess (73).

14. Liquid drain according to claims 12 and 13, **characterised in that** the centring needle (69) and the guide needle (72) are integral components of a needle element (75) passing through the control element (37).

15. Liquid drain according to any of claims 1 to 14, **characterised in that** a projection (65) located on the float (46), which acts on the control element (37) at a radial distance from the valve seat (36) as soon as the float (46) reaches a defined floating level, is provided as actuating element for the control element (37).

16. Liquid drain according to any of claims 1 to 15, **characterised in that** the float (46) is designed as a hollow body with an in particular annular cross-section.

## Revendications

1. Evacuation de liquide, comportant un dispositif d'évacuation (13) prévu sur un récipient de collecte (1) servant à recevoir le liquide (3) séparé, qui comporte une soupape d'évacuation (14) et une soupape de commande (15) servant à son actionnement, la soupape de commande (15) présentant un passage de commande (35) communiquant avec la soupape d'évacuation (14), auquel est associé un organe de commande (37) qui est déplaçable, par l'intermédiaire d'un flotteur (46) disposé dans le récipient de collecte (1) réagissant au niveau du liquide dans le récipient de collecte (1), entre une position de fermeture fermant le passage de commande (35) et au moins une position d'ouverture dégageant au moins en partie le passage de commande (35), le flotteur (46) étant disposé dans une chambre à flotteur (87) se trouvant dans le volume intérieur (2) du récipient de collecte (1), laquelle chambre est séparée par une cloison (86) du volume intérieur (2) du récipient de collecte (1), et communique, par au moins une ouverture d'arrivée (64), avec le volume intérieur (2) du récipient de collecte (1), **caractérisée en ce que** la voie d'écoulement (91) du liquide, s'écoulant lorsque la soupape d'évacuation (14) est ouverte, s'étend à l'extérieur de la chambre à flotteur (87).

2. Evacuation de liquide selon la revendication 1, **caractérisée en ce que** la soupape de commande (15) est disposée à l'intérieur de la chambre à flotteur (87).

3. Evacuation de liquide selon la revendication 1 ou 2, **caractérisée en ce que** la cloison (86) comprend un capot de protection (63) formant la délimitation latérale et la délimitation supérieure de la chambre à flotteur (87).

4. Evacuation de liquide selon la revendication 3, **caractérisée en ce que** la au moins une ouverture d'arrivée (64) est formée par un interstice entre la zone d'extrémité inférieure du capot de protection (63) et la partie de boîtier (43), opposée à celle-ci, du dispositif d'évacuation (13).

5. Evacuation de liquide selon l'une des revendications 1 à 4, **caractérisée en ce qu'**un dispositif de filtrage est associé à la au moins une ouverture d'arrivée (64).

6. Evacuation de liquide selon l'une des revendications 1 à 5, **caractérisée en ce que** la voie d'écoulement (91) du liquide s'écoulant est réalisée sans filtre.

7. Evacuation de liquide selon l'une des revendications 1 à 6, **caractérisée en ce que** l'organe de commande (37) est réalisé comme organe basculant reposant en position de fermeture sur un siège de soupape (36) associé au passage de commande (35), lequel organe basculant exécute un mouvement de basculement dirigé vers le côté à l'ouverture, pendant lequel il n'est soulevé que sur un côté du siège de soupape (36), au moins initialement.

8. Evacuation de liquide selon l'une des revendications 1 à 7, **caractérisée en ce que** l'organe de commande (37) présente, au moins dans sa partie de fermeture (47) recouvrant en position de fermeture le passage de commande (35), un contour extérieur arqué, dont la section transversale est bombée vers le siège de soupape (36), et roule sur le siège de soupape (36) pendant l'ouverture.

9. Evacuation de liquide selon la revendication 8, **caractérisée en ce que** l'organe de commande (37) a la forme d'un capuchon sphérique, au moins dans sa partie de fermeture (47) recouvrant le passage de commande (35) en position de fermeture.

10. Evacuation de liquide selon la revendication 9, **caractérisée en ce que** l'organe de commande (37) est réalisé à la manière d'une demi-sphère.

11. Evacuation de liquide selon l'une des revendications 7 à 10, **caractérisée en ce que** des moyens de guidage (68) servant au mouvement d'ouverture et/ou mouvement de fermeture, sont prévus pour guider l'organe de commande (37).

12. Evacuation de liquide selon la revendication 11, **caractérisée en ce que** les moyens de guidage (68) comprennent une aiguille de centrage (69) fixée sur l'organe de commande (37), pénétrant avec un jeu radial à l'intérieur du passage de commande (35).

13. Evacuation de liquide selon la revendication 11 ou 12, **caractérisée en ce que** les moyens de guidage (68) comprennent une aiguille de guidage (72) dépassant de l'organe de commande (37), sur le côté opposé au siège de soupape (36) et pénétrant dans un creux de guidage (73) en particulier de type fente.

14. Evacuation de liquide selon les revendications 12 et 13, **caractérisée en ce que** l'aiguille de centrage (69) et l'aiguille de guidage (72) font partie intégrante d'une seule pièce d'un élément à aiguille (75) traversant l'organe de commande (37).

15. Evacuation de liquide selon l'une des revendications 1 à 14, **caractérisée en ce qu'**il est prévu comme élément d'actionnement de l'organe de commande (37), une saillie (65) disposée sur le flotteur (46), qui agit sur l'organe de commande (37) lorsqu'est atteinte une hauteur déterminée de flottaison du flotteur (46), avec distance radiale par rapport au siège de soupape (36).

16. Evacuation de liquide selon l'une des revendications 1 à 15, **caractérisée en ce que** le flotteur (46) est réalisé comme corps creux en particulier de forme annulaire dans sa section transversale.
